# EUROPÄISCHE PATENTSCHRIFT

(11) **EP 2 714 513 B1**
(45) Veröffentlichungstag und Bekanntmachung des Hinweises auf die Patenterteilung: **28.09.2016**
(21) Anmeldenummer: 12727290.4
(22) Anmeldetag: 22.05.2012
(51) Int. Cl.: B60N 2/015, B64D 11/06

(54) **SITZBEFESTIGUNGSVORRICHTUNG**
SEAT FASTENING DEVICE
DISPOSITIF DE FIXATION DE SIÈGE

(30) Priorität: 26.05.2011 DE 102011103266
(43) Veröffentlichungstag der Anmeldung: 09.04.2014
(73) Patentinhaber: Recaro Aircraft Seating GmbH & Co. KG, 74523 Schwäbisch Hall (DE)
(72) Erfinder: MEJUHAS, Marsel, 74523 Schwäbisch Hall (DE)
(74) Vertreter: Daub, Thomas
(86) Internationale Anmeldenummer: PCT/EP2012/002169
(87) Internationale Veröffentlichungsnummer: WO 2012/159735

(56) Entgegenhaltungen:
- EP-A2- 1 792 827
- WO-A1-2005/028306
- DE-A1- 19 812 490
- US-A1- 2007 253 762

## Beschreibung

### Stand der Technik

Die Erfindung geht aus von einer Sitzbefestigungsvorrichtung nach dem Oberbegriff des Patentanspruchs 1.

Aus der Druckschrift US 3,523,669 ist bereits eine Sitzbefestigungsvorrichtung zur Befestigung eines Sitzes oder zum Festzurren von Lasten an einer an einem Boden befestigten Befestigungsschiene, mit einem Grundkörper, einer Längsbefestigungseinheit mit einem Längsbefestigungsmittel und mit einer Sicherungseinheit zur Sicherung des Längsbefestigungsmittels bekannt. Des Weiteren ist aus der US 2007/253762 A1 eine Sitzbefestigungsvorrichtung zur Befestigung eines Sitzes oder zum Festzurren von Lasten an zumindest einer an einem Boden befestigten Befestigungsschiene, mit einem Grundkörper, einer Längsbefestigungseinheit mit zumindest einem Längsbefestigungsmittel und mit einer Sicherungseinheit zur Sicherung des Längsbefestigungsmittels bekannt, wobei das Längsbefestigungsmittel zumindest ein erstes Formschlusselement aufweist, der Grundkörper zumindest ein zweites, vom ersten verschiedenes Formschlusselement aufweist und die Sicherungseinheit ein drittes, vom ersten und zweiten Formschlusselement verschiedenes Formschlusselement aufweist und in einer gesicherten Position der Sicherungseinheit eine Formschlussverbindung zwischen dem ersten, dem zweiten und dem dritten Formschlusselement besteht und die Sicherungseinheit einen Bedienungsgriff zur Bedienung der Sicherungseinheit umfasst und das zumindest eine Formschlusselement der Sicherungseinheit starr mit dem Bedienungsgriff verbunden ist.

Der Erfindung liegt insbesondere die Aufgabe zugrunde, eine Sitzbefestigungsvorrichtung mit einer konstruktiv einfachen und teilesparenden Sicherungseinheit bereitzustellen.

Diese Aufgabe wird durch eine Sitzbefestigungsvorrichtung gemäß dem Patentanspruch 1 gelöst. Weitere vorteilhafte Ausführungen der Erfindung können den Unteransprüchen entnommen werden.

### Vorteile der Erfindung

Die Erfindung geht aus von einer Sitzbefestigungsvorrichtung zur Befestigung eines Sitzes oder zum Festzurren von Lasten an zumindest einer an einem Boden befestigten Befestigungsschiene, mit einem Grundkörper, einer Längsbefestigungseinheit mit zumindest einem Längsbefestigungsmittel und mit einer Sicherungseinheit zur Sicherung des Längsbefestigungsmittels, wobei das Längsbefestigungsmittel zumindest ein erstes Formschlusselement aufweist, der Grundkörper zumindest ein zweites, vom ersten verschiedenes Formschlusselement aufweist und die Sicherungseinheit ein drittes, vom ersten und zweiten Formschlusselement verschiedenes Formschlusselement aufweist und in einer gesicherten Position der Sicherungseinheit eine Formschlussverbindung zwischen dem ersten, dem zweiten und dem dritten Formschlusselement besteht und die Sicherungseinheit einen Bedienungsgriff zur Bedienung der Sicherungseinheit umfasst und das zumindest eine Formschlusselement der Sicherungseinheit starr mit dem Bedienungsgriff verbunden ist.

Es wird vorgeschlagen, dass der Bedienungsgriff schwenkbar gelagert ist, wobei das Längsbefestigungsmittel mit dem Bedienungsgriff der Sicherungseinheit gekoppelt und mittels des Bedienungsgriffs zwischen einer Freigabeposition und einer Verriegelungsposition verbringbar ist. Unter einem "zweiten, von einem ersten verschiedenen Element" soll in diesem Zusammenhang insbesondere verstanden werden, dass zwei Elemente existieren, die prinzipiell, z.B. durch Anbringen einer Markierung, unterscheidbar sind und deren Formen nicht identisch sein müssen, aber identisch sein können, so dass der Ausdruck "verschieden" keinerlei Rückschlüsse auf Ausgestaltungen der beiden Formschlusselemente erlauben oder diesbezügliche Einschränkungen beinhalten soll. Dadurch kann eine besonders einfache Handhabung der Sicherungseinheit der Sitzbefestigungsvorrichtung erreicht werden und insbesondere eine besonders kompakte und teile- und damit kostensparende Lösung einer Verbringung des Längsbefestigungsmittels bereitgestellt werden.

Wenn der Bedienungsgriff zwischen zumindest einer Sicherungsstellung und zumindest einer Freigabestellung bewegbar ist, kann eine einfache, zuverlässige und komfortable Bedienung der Sicherungseinheit erzielt werden.

In einer vorteilhaften Ausgestaltung ist der Bedienungsgriff der Sicherungseinheit mit zumindest einem federelastischen Element zu einer Größenveränderung durch Einwirken einer Kraft in zumindest einer Richtung ausgestattet. Vorzugsweise beträgt die Größenveränderung an einem Ort des Einwirkens einer Kraft von bis zu 50 Newton mehr als 2 Millimeter, besonders vorteilhaft zwischen 1 und 2 Millimeter, in Kraftrichtung. Dadurch können bei geeigneter Auslegung eine zuverlässige Sicherung der Sitzbefestigungsvorrichtung und zugleich eine einfache Bedienung der Sicherungseinheit erzielt werden. Vorteilhafterweise besteht der Bedienungsgriff im Wesentlichen aus einem federelastischen Werkstoff, wodurch sich vielfältige Auslegungsmöglichkeiten eröffnen können. Unter "im Wesentlichen" soll in diesem Zusammenhang insbesondere zu mehr als 50%, besonders vorteilhaft zu mehr als 70%, verstanden werden.

Des Weiteren wird vorgeschlagen, dass der Bedienungsgriff durch eine Bewegung von der zumindest einen Sicherungsstellung zu der zumindest einen Freigabestellung mit einer Anlagefläche in Anlage kommt, wodurch eine im Wesentlichen quer zu einer Richtung der Bewegung wirkende Kraft erzeugbar ist. Die im Wesentlichen quer zur Bewegungsrichtung des Bedienungsgriffs wirkende Kraft kann bei geeigneter Auslegung eine Größenveränderung des Bedienungsgriffs bewirken, wodurch eine besonders einfache Bedienung der Sicherungseinheit ermöglicht werden kann.

Weiterhin wird vorgeschlagen, dass zumindest eines der drei Formschlusselemente als Ausnehmung ausgebildet ist, wodurch die Formschlussverbindung der drei Formschlusselemente auf konstruktiv besonders einfache und teilesparende Weise realisiert werden kann.

Darüber hinaus wird ein Sitzbefestigungssystem vorgeschlagen, das zumindest eine der vorgeschlagenen Sitzbefestigungsvorrichtungen und zumindest eine Befestigungsschiene umfasst, die an ihrer Oberseite mit einander zugewandten Profilflanken einen Längskanal begrenzt, der in einem vorgegebenen Maß seinen freien Eintrittsquerschnitt verbreiternde Durchtrittsöffnungen aufweist, wobei die Durchtrittsöffnungen voneinander einen gleichmäßigen Abstand aufweisen. Befestigungsschienen dieser Art sind aus dem Stand der Technik, beispielsweise zur Verwendung mit Fluggastsitzen, bekannt, so dass durch eine Kombination mit einer der vorgeschlagenen Sitzbefestigungsvorrichtungen vorteilhaft ein konstruktiv einfaches und kostengünstiges Sitzbefestigungssystem zur Befestigung eines Sitzes oder zum Festzurren von Lasten bereitgestellt werden kann.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische, schematische Ansicht eines Sitzgestells eines Fluggastsitzes mit zwei Sitzbefestigungsvorrichtungen,
- Fig. 2: eine perspektivische Ansicht einer Befestigungsschiene,
- Fig. 3: eine Sitzbefestigungsvorrichtung in seitlicher Ansicht in einem unverriegelten Zustand mit einem geschnittenen Grundkörper, einem Bedienungsgriff in einer Freigabestellung und einem Längsbefestigungsmittel in einer Freigabeposition,
- Fig. 4: die Sitzbefestigungsvorrichtung gemäß der Fig. 3 in seitlicher Ansicht in einem verriegelten Zustand mit geschnittenem Grundkörper, dem Bedienungsgriff in einer ersten Sicherungsstellung und dem Längsbefestigungsmittel in einer Verriegelungsposition,
- Fig. 5: die Sitzbefestigungsvorrichtung gemäß der Fig. 3 in einer teilgeschnittenen, perspektivischen Ansicht mit dem Bedienungsgriff in der Freigabestellung und dem Längsbefestigungsmittel in der Verriegelungsposition,
- Fig. 6: die Sitzbefestigungsvorrichtung gemäß der Fig. 3 in einer teilgeschnittenen, perspektivischen Ansicht mit dem Bedienungsgriff in einer zweiten Sicherungsstellung und dem Längsbefestigungsmittel in der Freigabeposition und
- Fig. 7: die Sitzbefestigungsvorrichtung gemäß der Fig. 3 in einer teilgeschnittenen, perspektivischen Ansicht mit dem Bedienungsgriff in der ersten Sicherungsstellung und dem Längsbefestigungsmittel in der Verriegelungsposition.

### Beschreibung des Ausführungsbeispiels

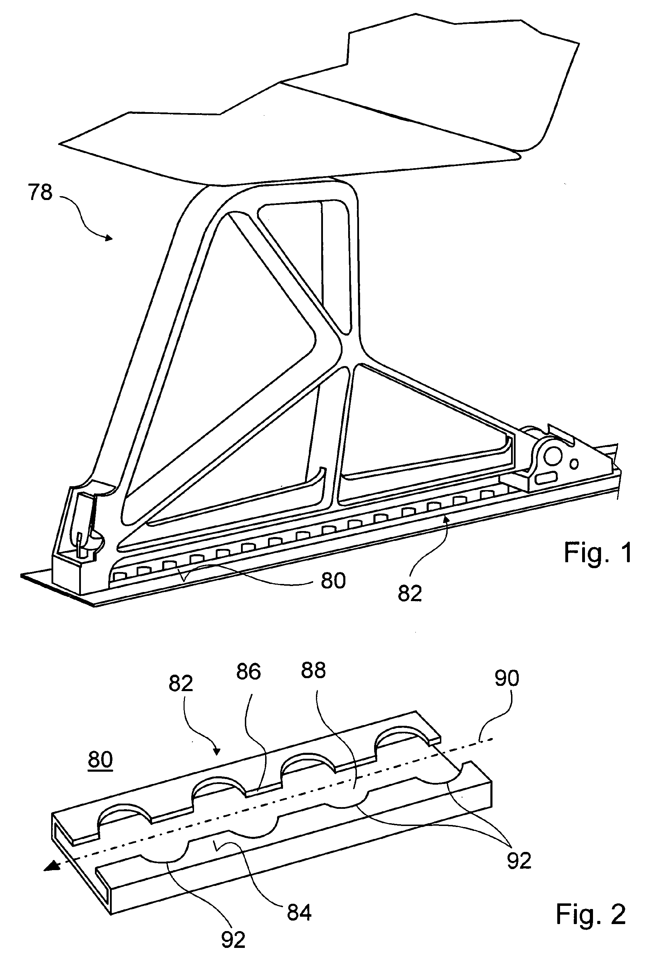

Figur 1 zeigt schematisch ein Sitzgestell 78 eines nur ansatzweise dargestellten Sitzes, der als Fluggastsitz ausgebildet ist, in einer perspektivischen Ansicht. Das Sitzgestell 78 ist durch zwei Sitzbefestigungsvorrichtungen an eine Befestigungsschiene 82 gekoppelt. Die Befestigungsschiene 82 ist an einem Boden 80 einer Flugzeugkabine befestigt. In einem geöffneten Zustand der Sitzbefestigungsvorrichtungen lässt sich das Sitzgestell 78 entlang der Befestigungsschiene 82 verschieben.

Die Befestigungsschiene 82 ist in einer Detailansicht in Figur 2 näher dargestellt. Die Befestigungsschiene 82 schließt mit einer Oberseite 84 bündig mit dem Boden 80 ab. Die Befestigungsschiene 82 wird von einem Hohlprofil gebildet, das an der Oberseite 84 mit einander zugewandten Profilflanken 86 einen Längskanal 88 begrenzt. Der Längskanal 88, der sich in einer Längsrichtung 90 erstreckt, die vorzugsweise einer Flugrichtung entspricht, weist in einem vorgegebenen Maß seinen freien Eintrittsquerschnitt verbreiternde Durchtrittsöffnungen 92 auf, die voneinander einen gleichmäßigen Abstand aufweisen und bohrungsartig ausgeführt sind. Diese Ausführung einer Befestigungsschiene 82 ist im Stand der Technik bekannt und wird hier nicht näher beschrieben.

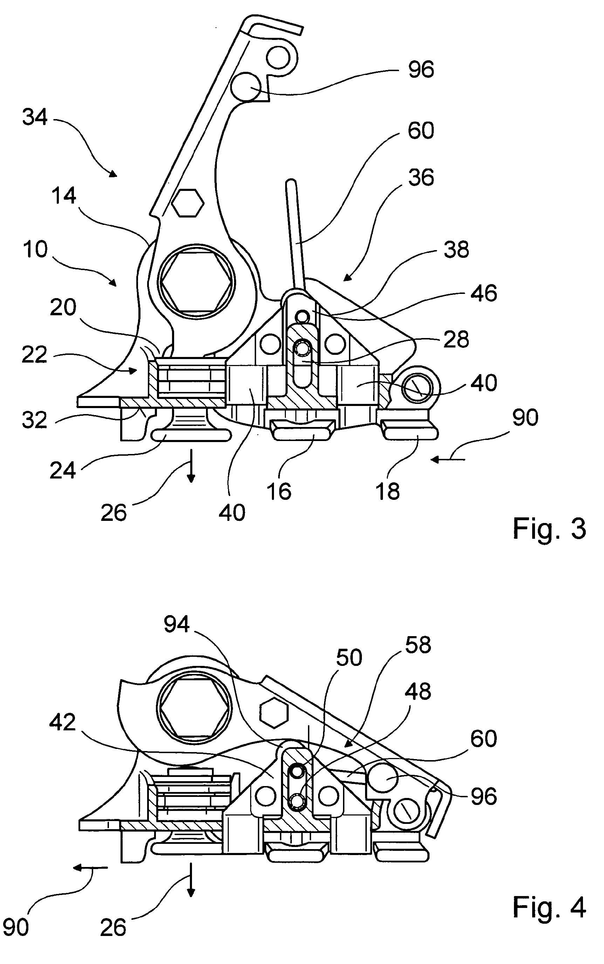

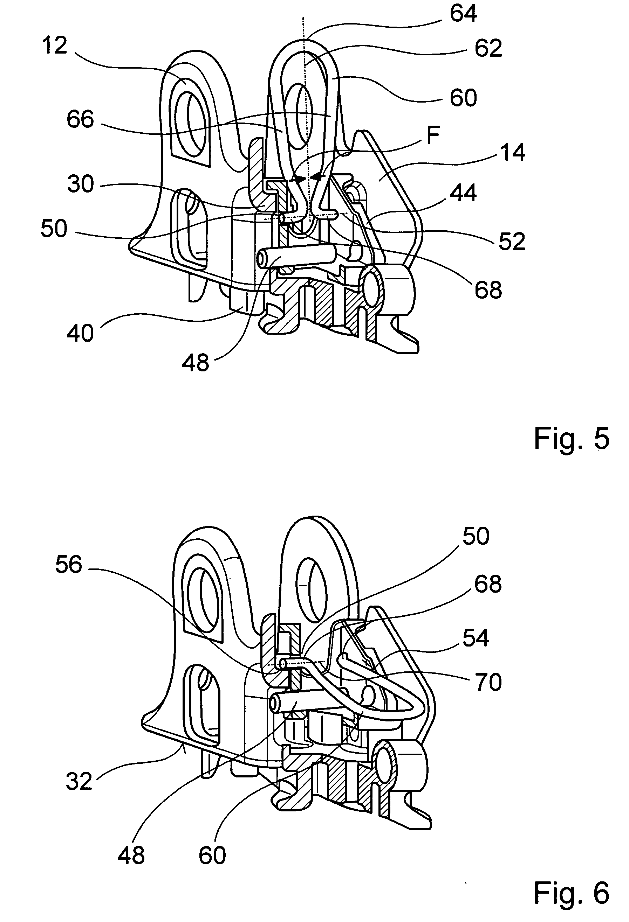

Die in der Ansicht der Fig. 1 rechts dargestellte Sitzbefestigungsvorrichtung ist in Figur 3 in einer Schnittansicht in einem unverriegelten Zustand gezeigt. Die Sitzbefestigungsvorrichtung weist einen Grundkörper 10 mit zwei in einem Einbauzustand parallel zur Längsrichtung 90 angeordneten Längselementen 12, 14 (Fig. 5) und mit zwei fest an einer der Befestigungsschiene 82 zugewandten Unterseite des Grundkörpers 10 angeordneten Befestigungsmitteln 16, 18 auf. Ferner umfasst die Sitzbefestigungsvorrichtung in bekannter Weise ein entlang einer senkrecht zum Boden 80 verlaufenden Bewegungsrichtung 26 linear bewegliches vertikales Befestigungsmittel 22, das innerhalb einer Ausnehmung 20 des Grundkörpers 10 geführt ist. An einem Ende des beweglichen vertikalen Befestigungsmittels 22 ist ein Befestigungsfuß 24 angeordnet, der zur Kopplung mit der Befestigungsschiene 82 vorgesehen ist. Die fest angeordneten Befestigungsmittel 16, 18 sind, von dem beweglichen vertikalen Befestigungsmittel 22 ausgehend, hintereinander in einer Richtung angeordnet.

Des Weiteren umfasst die Sitzbefestigungsvorrichtung eine Längsbefestigungseinheit 36 mit einem Längsbefestigungsmittel 38, das als Formkörper mit rechteckiger Grundfläche ausgebildet ist, an dessen vier Ecken jeweils ein gerader, zylindrischer Verriegelungsbolzen 40 starr mit dem Formkörper verbunden und den fest angeordneten Befestigungsmitteln 16, 18 zugewandt angeordnet ist. Das Längsbefestigungsmittel 38 weist zwei parallel ausgerichtete, von der Grundfläche ausgehende, den fest angeordneten Befestigungsmitteln 16, 18 abgewandte, dreieckförmige Führungselemente 42, 44 (Figuren 4 und 5) auf, wobei eine längste Basisseite des jeweiligen dreieckförmigen Führungselements 42, 44 mit einer längeren Seite der rechteckigen Grundfläche des Formkörpers übereinstimmt. Jedes der beiden dreieckförmigen Führungselemente 42, 44 weist eine parallel zur Bewegungsrichtung 26 verlaufende Führungsnut 46 auf (Fig. 3), durch die das Längsbefestigungsmittel 38 in einem Einbauzustand mittels korrespondierender, dem Längsbefestigungsmittel 38 zugewandter Einkragungen 30 (Fig. 5) von parallel zur Bewegungsrichtung 26 ausgerichteten Langlöchern 28 in den beiden Führungselementen 42, 44 des Grundkörpers 10 parallel zur Bewegungsrichtung 26 linear beweglich geführt ist. Ein Bewegungsspielraum des Längsbefestigungsmittels 38 im Einbauzustand ist durch ein Zusammenwirken eines quer zur Bewegungsrichtung 26 und quer zur Längsrichtung 90 zwischen den beiden Führungselementen 42, 44 des Längsbefestigungsmittels 38 angeordneten Rundzapfens 48 mit den Langlöchern 28 festgelegt (Figuren 3 und 4).

Bei einer Montage werden in einem unverriegelten Zustand der Sitzbefestigungsvorrichtung zuerst die fest angeordneten Befestigungsmittel 16, 18 in Durchtrittsöffnungen 92 der Befestigungsschiene 82 eingeführt, so dass der Grundkörper 10 mit einer Auflagefläche 32 auf der Oberseite 84 der Befestigungsschiene 82 aufliegt (Fig. 6). Anschließend wird die Sitzbefestigungsvorrichtung in der Längsrichtung 90 der Befestigungsschiene 82 verschoben, bis sich die fest angeordneten Befestigungsmittel 16, 18 unter den Profilflanken 86 der Befestigungsschiene 82 befinden und die Verriegelungsbolzen 40 des Längsbefestigungsmittels 38 formschlüssig in Durchtrittsöffnungen 92 der Befestigungsschiene 82 eingeführt werden können, wodurch das Längsbefestigungsmittel 38 in eine Verriegelungsposition verbracht ist (Fig. 5) und die Sitzbefestigungsvorrichtung gegen ein Verschieben in Längsrichtung 90 der Befestigungsschiene 82 gesichert ist. Anschließend wird das linear bewegliche vertikale Befestigungsmittel 22 mittels einer Betätigungseinheit 34 der Sitzbefestigungsvorrichtung kraftschlüssig unter die Profilflanken 86 der Befestigungsschiene 82 gespannt. Dem Fachmann sind geeignete Ausgestaltungen der Betätigungseinheit 34 geläufig, so dass hier auf eine nähere Beschreibung verzichtet werden kann.

Sind die Verriegelungsbolzen 40 des Längsbefestigungsmittels 38, beispielsweise durch einen Bedienungsfehler, unvollständig in die Durchtrittsöffnungen 92 der Befestigungsschiene 82 eingeführt, so verhindern an den dreieckförmigen Führungselementen 42, 44 angeformte Stoppelemente 94 (Fig. 4) eine vollständige Durchführung einer Schließbewegung der Betätigungseinheit 34. Für den Bediener ist diese Stellung des Längsbefestigungsmittels 38 durch in einer Signalfarbe ausgebildete Farbmarkierungen 96 leicht ersichtlich (Figuren 3 und 4), die nach Durchführung einer Korrektur und der vollständigen Durchführung der Schließbewegung der Betätigungseinheit 34 durch die Längselemente 12, 14 des Grundkörpers abgedeckt sind, wodurch eine korrekte Positionierung des Längsbefestigungsmittels 38 angezeigt ist.

In diesem Zustand ist das Längsbefestigungsmittel 38 formschlüssig in die Durchtrittsöffnungen 92 der Befestigungsschiene 82 eingeführt und sichert die Sitzbefestigungsvorrichtung gegen ein Verschieben in Längsrichtung 90. Prinzipiell ist das Längsbefestigungsmittel 38 jedoch weiterhin entgegen der Bewegungsrichtung 26 bewegbar, was beim Auftreten von Beschleunigungen, beispielsweise durch Übertragung von Vibrationen, nachteilig sein könnte und im Extremfall die Gefahr eines Auflösens der Formschlussverbindungen der Verriegelungsbolzen 40 und der Durchtrittsöffnungen 92 der Befestigungsschiene 82 in sich birgt.

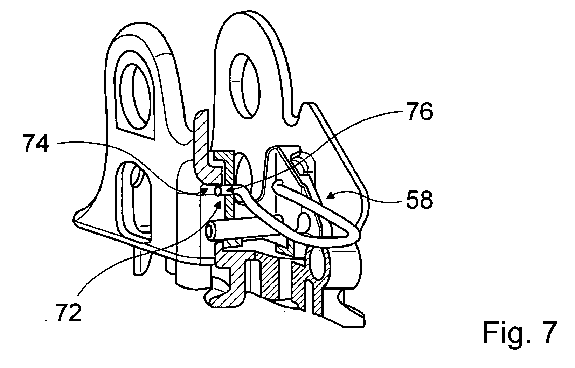

Zur Sicherung des Längsbefestigungsmittels 38 weist daher die Sitzbefestigungsvorrichtung eine Sicherungseinheit 58 auf (Figuren 4 und 7). Die Sicherungseinheit 58 umfasst einen Bedienungsgriff 60 zur Bedienung der Sicherungseinheit 58, der vollständig aus einem federelastischen Werkstoff, nämlich einem Federstahldraht mit kreisrundem Querschnitt, besteht und als offene Schlaufe ausgebildet ist, die eine auf dem Kopf stehende U-Form mit im Wesentlichen parallel zueinander verlaufenden Schenkeln 66 besitzt und ein eigentliches Griffelement des Bedienungsgriffs 60 zum Angreifen durch einen Bediener ausbildet (Fig. 5). Grundsätzlich käme als Material für den Bedienungsgriff 60 auch ein anderes, dem Fachmann sinnvoll erscheinendes Material, beispielsweise ein glasfaserverstärkter Kunststoff (GFK), in Frage.

Demzufolge ist der Bedienungsgriff 60 mit einem federelastischen Element zu einer Größenveränderung durch Einwirken einer Kraft F in einer Richtung ausgestattet, die im Einbauzustand quer zur Bewegungsrichtung 26 und quer zur Längsrichtung 90 orientiert ist. An einem Verlauf der Schenkel 66, der einem Umkehrpunkt 64 der Schlaufe abgewandt ist, sind diese jeweils einwärts, zu einer Mittellinie 62 der Schlaufe hin, gebogen. Jedes Ende 68 der Schenkel 66 der Schlaufe ist als auswärts gebogene Umlenkung ausgebildet, wobei eine Erstreckungsrichtung 70 der Enden 68 im Einbauzustand quer zur Bewegungsrichtung 26 und quer zur Längsrichtung 90 verläuft (Fig. 6).

Die Enden 68 der Schenkel 66 des Bedienungsgriffs 60 sind in von kreisrunden Durchbrüchen 50 gebildeten Ausnehmungen der dreieckförmigen Führungselemente 42, 44 gelagert (Fig. 5), so dass der Bedienungsgriff 60 um eine von einer Verbindungslinie der Ausnehmungen gebildete, parallel zur Erstreckungsrichtung 70 der Enden 68 angeordnete Achse 52 schwenkbar gelagert und das Längsbefestigungsmittel 38 mit dem Bedienungsgriff 60 gekoppelt ist. Die Schlaufe des Bedienungsgriffs 60 ist so dimensioniert, dass die Enden 68 der Schenkel 66 im Einbauzustand durch eine rücktreibende Federkraft des federelastischen Werkstoffs in den Durchbrüchen 50 der Führungselemente 42, 44 gehalten werden und in eine nach außen gerichtete Richtung kraftbelastet sind.

Die von kreisrunden Durchbrüchen 50 gebildeten Ausnehmungen der dreieckförmigen Führungselemente 42, 44 bilden erste Formschlusselemente 72 des Längsbefestigungsmittels 38. Der Grundkörper 10 weist zweite, von den ersten Formschlusselementen 72 verschiedene Formschlusselemente 74 auf, die von den von der Befestigungsschiene 82 abgewandten Randbereichen der Langlöcher 28 gebildet sind (Fig. 7).

Die Sicherheitseinheit 58 umfasst dritte, von den ersten Formschlusselementen 72 und den zweiten Formschlusselementen 74 verschiedene Formschlusselemente 76, die von den Enden 68 der Schenkel 66 des Bedienungsgriffs 60 gebildet und mit dem Bedienungsgriff 60 starr verbunden sind.

In einer gesicherten Position der Sicherungseinheit 58 wirken die ersten Formschlusselemente 72, die zweiten Formschlusselemente 74 und die dritten Formschlusselemente 76 zusammen, so dass eine Formschlussverbindung zwischen diesen Formschlusselementen 72, 74, 76 besteht, wie nachfolgend beschrieben wird.

Der Bedienungsgriff 60 ist um die von der Verbindungslinie der Durchbrüche 50 gebildete Achse 52 zwischen einer ersten Sicherungsstellung (Figuren 4 und 7), einer Freigabestellung (Figuren 3 und 5) und einer zweiten Sicherungsstellung (Figur 6) bewegbar.

Ausgehend von dem unverriegelten Zustand der Sitzbefestigungsvorrichtung gemäß der Figur 6 soll diese entsprechend der zuvor beschriebenen Montage so weit auf der Befestigungsschiene 82 montiert sein, dass der Grundkörper 10 mit einer Auflagefläche 32 auf der Oberseite 84 der Befestigungsschiene 82 aufliegt und die fest angeordneten Befestigungsmittel 16, 18 unter den Profilflanken 86 der Befestigungsschiene 82 angeordnet sind. Das Längsbefestigungsmittel 38 befindet sich dabei in einer Freigabeposition. Ist die Sitzbefestigungsvorrichtung in einer Position in der Längsrichtung 90 relativ zu den Durchtrittsöffnungen 92 in der Oberseite 84 der Befestigungsschiene 82 angeordnet, in der die Verriegelungsbolzen 40 des Längsbefestigungsmittels 38 die Durchtrittsöffnungen 92 der Befestigungsschiene 82 in der Bewegungsrichtung 26 überdecken, dann wird der Bedienungsgriff 60 der Sicherungseinheit 58 aus der Position gemäß der Figur 6 um etwa 90° gegen den Uhrzeigersinn um die Achse 52 in diePosition gemäß der Figur 3 geschwenkt. Das Längsbefestigungsmittel 38 ist danach mittels des Bedienungsgriffs 60 zwischen der Freigabeposition und der Verriegelungsposition verbringbar.

Durch eine Bewegung des Bedienungsgriffs 60 von der ersten Sicherungsstellung der Fig. 7 zu der Freigabestellung der Fig. 5 kommen die Schenkel 66 des Bedienungsgriffs 60 mit Anlageflächen 54 (Fig. 6) des Längsbefestigungsmittels 38 in Anlage, deren Abstand sich in Schwenkrichtung des Bedienungsgriffs 60 verringert, wodurch auf den Bedienungsgriff 60 die im Wesentlichen quer zur Bewegungsrichtung 26 wirkende Kraft F erzeugbar ist (Fig. 5). Diese Kraft F führt aufgrund des federelastischen Elements des Bedienungsgriffs 60 zu einer Größenveränderung in Richtung der wirkenden Kraft F, so dass die Enden 68 der Schenkel 66 des Bedienungsgriffs 60 in Richtung der Mittellinie 62 des Bedienungsgriffs 60 bewegt werden.

In der Freigabestellung des Bedienungsgriffs 60 durchgreifen die Enden 68 der Schenkel 66 des Bedienungsgriffs 60 die von kreisrunden Durchbrüchen 50 gebildeten Ausnehmungen der dreieckförmigen Führungselemente 42, 44 und schließen bündig mit äußeren Rändern der Ausnehmungen ab. Dadurch ist das Längsbefestigungsmittel 38 entlang der Bewegungsrichtung 26 linear beweglich und die Verriegelungsbolzen 40 des Längsbefestigungsmittels 38 können in Richtung auf die Durchtrittsöffnungen 92 der Befestigungsschiene 82 verschoben und formschlüssig in die Durchtrittsöffnungen 92 eingeführt werden. In dieser Stellung befindet sich das Längsbefestigungsmittel 38 in der Verriegelungsposition (Fig. 5).

Wird nun der Bedienungsgriff 60 aus der Position gemäß der Figur 5 um etwa 90° im Uhrzeigersinn geschwenkt, wird aufgrund des federelastischen Elements des Bedienungsgriffs 60 die Größenveränderung rückgängig gemacht und die Enden 68 der Schenkel 66 des Bedienungsgriffs 60 werden von der Mittellinie 62 des Bedienungsgriffs 60 wegführend nach außen bewegt, wodurch sie die von kreisrunden Durchbrüchen 50 gebildeten Ausnehmungen der dreieckförmigen Führungselemente 42, 44 und darüber hinaus die Langlöcher 28 in den beiden Führungselementen 42, 44 durchdringen (Figuren 4 und 7). In dieser Sicherungsposition der Sicherungseinheit 58 besteht eine Formschlussverbindung zwischen den ersten Formschlusselementen 72, den zweiten Formschlusselementen 74 und den dritten Formschlusselementen 76 (Fig. 7).

Durch eine Schwenkbewegung des Bedienungsgriffs 60 (nach Betätigung der Betätigungseinheit 34) aus der Position gemäß den Figuren 4 und 7 um etwa 90° gegen den Uhrzeigersinn ist die Formschlussverbindung zwischen den ersten Formschlusselementen 72, den zweiten Formschlusselementen 74 und den dritten Formschlusselementen 76 lösbar, wodurch das Längsbefestigungsmittel 38 am Bedienungsgriff 60 nach oben verbringbar und die Verriegelungsbolzen 40 des Längsbefestigungsmittels 38 aus den Durchtrittsöffnungen 92 der Befestigungsschiene 82 entfernbar sind. In der Freigabeposition des Längsbefestigungsmittels 38, die durch einen Anschlag des Rundzapfens 48 an die von der Befestigungsschiene 82 abgewandten Randbereiche der Langlöcher 28 festgelegt ist (Fig. 6), kann durch eine erneute Schwenkbewegung des Bedienungsgriffs 60 um etwa 90° im Uhrzeigersinn und durch die Wirkungdes Federelements des Bedienungsgriffs 60 erreicht werden, dass die Enden 68 der Schenkel 66 des Bedienungsgriffs 60 die von kreisrunden Durchbrüchen 50 gebildeten Ausnehmungen der dreieckförmigen Führungselemente 42, 44 durchdringen und über die Führungselemente 42, 44 hinausragen und auf einer Innenseite der Führungselemente 42, 44 angeordnete Ablageelemente 56 in einer zweiten Sicherungsstellung des Bedienungsgriffs 60 ablegbar sind, wodurch die in der Fig. 6 dargestellte Position der Sitzbefestigungsvorrichtung erneut erreicht ist.

Die Sitzbefestigungsvorrichtung und die Befestigungsschiene 82 bilden in einem Zusammenbauzustand ein Sitzbefestigungssystem zum Befestigen des als Fluggastsitz ausgebildeten Sitzes am Boden 80 der Flugzeugkabine.

**Bezugszeichen**

| | | | |
|---|---|---|---|
| 10 | Grundkörper | 56 | Ablageelement |
| 12 | Längselement | 58 | Sicherungseinheit |
| 14 | Längselement | 60 | Bedienungsgriff |
| 16 | Befestigungsmittel | 62 | Mittellinie |
| 18 | Befestigungsmittel | 64 | Umkehrpunkt |
| 20 | Ausnehmung | 66 | Schenkel |
| 22 | Befestigungsmittel | 68 | Ende |
| 24 | Befestigungsfuß | 70 | Erstreckungsrichtung |
| 26 | Bewegungsrichtung | 72 | Formschlusselement |
| 28 | Langloch | 74 | Formschlusselement |
| 30 | Einkragung | 76 | Formschlusselement |
| 32 | Auflagefläche | 78 | Sitzgestell |
| 34 | Betätigungseinheit | 80 | Boden |
| 36 | Längsbefestigungseinheit | 82 | Befestigungsschiene |
| 38 | Längsbefestigungsmittel | 84 | Oberseite |
| 40 | Verriegelungsbolzen | 86 | Profilflanke |
| 42 | Führungselement | 88 | Längskanal |
| 44 | Führungselement | 90 | Längsrichtung |
| 46 | Führungsnut | 92 | Durchtrittsöffnung |
| 48 | Rundzapfen | 94 | Stoppelement |
| 50 | Durchbruch | 96 | Farbmarkierung |
| 52 | Achse | F | Kraft |
| 54 | Anlagefläche | | |

## Patentansprüche

1. Sitzbefestigungsvorrichtung zur Befestigung eines Sitzes oder zum Festzurren von Lasten an zumindest einer an einem Boden (80) befestigten Befestigungsschiene (82), mit einem Grundkörper (10), einer Längsbefestigungseinheit (36) mit zumindest einem Längsbefestigungsmittel (38) und mit einer Sicherungseinheit (58) zur Sicherung des Längsbefestigungsmittels (38), wobei das Längsbefestigungsmittel (38) zumindest ein erstes Formschlusselement (72) und der Grundkörper (10) zumindest ein zweites, vom ersten verschiedenes Formschlusselement (74) aufweist und die Sicherungseinheit (58) ein drittes, vom ersten Formschlusselement (72) und vom zweiten Formschlusselement (74) verschiedenes Formschlusselement (76) aufweist und in einer gesicherten Position der Sicherungseinheit (58) eine Formschlussverbindung zwischen dem ersten Formschlusselement (72), dem zweiten Formschlusselement (74) und dem dritten Formschlusselement (76) besteht und die Sicherungseinheit (58) einen Bedienungsgriff (60) zur Bedienung der Sicherungseinheit (58) umfasst und das zumindest eine Formschlusselement (76) der Sicherungseinheit (58) starr mit dem Bedienungsgriff (60) verbunden ist, **dadurch gekennzeichnet, dass** der Bedienungsgriff (60) schwenkbar gelagert ist, wobei das Längsbefestigungsmittel (38) mit dem Bedienungsgriff (60) der Sicherungseinheit (58) gekoppelt und mittels des Bedienungsgriffs (60) zwischen einer Freigabeposition und einer Verriegelungsposition verbringbar ist.

2. Sitzbefestigungsvorrichtung nach Anspruch 1, **dadurch gekennzeichnet, dass** der Bedienungsgriff (60) zwischen zumindest einer Freigabestellung und zumindest einer Sicherungsstellung bewegbar ist.

3. Sitzbefestigungsvorrichtung nach Anspruch 1 oder 2, **dadurch gekennzeichnet, dass** der Bedienungsgriff (60) mit zumindest einem federelastischen Element zu einer Größenveränderung durch Einwirken einer Kraft (F) in zumindest einer Richtung ausgestattet ist.

4. Sitzbefestigungsvorrichtung nach Anspruch 2 und 3, **dadurch gekennzeichnet, dass** der Bedienungsgriff (60) durch eine Bewegung von der zumindest einen Sicherungsstellung zu der zumindest einen Freigabestellung mit einer Anlagefläche (54) in Anlage kommt, wodurch eine im Wesentlichen quer zu einer Richtung der Bewegung wirkende Kraft (F) erzeugbar ist.

5. Sitzbefestigungsvorrichtung zumindest nach den Ansprüchen 3 bis 4, **dadurch gekennzeichnet, dass** der Bedienungsgriff (60) im Wesentlichen aus einem federelastischen Werkstoff besteht.

6. Sitzbefestigungsvorrichtung nach einem der vorhergehenden Ansprüche, **dadurch gekennzeichnet, dass** zumindest eines der drei Formschlusselemente (72, 74, 76) als Ausnehmung ausgebildet ist.

7. Sitzbefestigungssystem, umfassend zumindest eine Sitzbefestigungsvorrichtung nach einem der vorhergehenden Ansprüche und zumindest eine Befestigungsschiene (82), die an einer Oberseite (84) mit einander zugewandten Profilflanken (86) einen Längskanal (88) begrenzt, der in einem vorgegebenen Maß seinen freien Eintrittsquerschnitt verbreiternde Durchtrittsöffnungen (92) aufweist, wobei die Durchtrittsöffnungen (92) voneinander einen gleichmäßigen Abstand aufweisen.

## Claims

1. Seat fastening device for fastening a seat or for securely lashing loads to at least one fastening rail (82) that is fastened to a floor (80), with a base body (10), with a longitudinal fastening unit (36) comprising at least one longitudinal fastening means (38) and with a securing unit (58) for securing the longitudinal fastening means (38), wherein the longitudinal fastening means (38) comprises at least one first form-fit element (72) and the base body (10) comprises at least one second form-fit element (74) differing from the first one and the securing unit (58) comprises at least one third form-fit element (76) differing from the first form-fit element (72) and from the second form-fit element (74), and wherein, in a secured position of the securing unit (58), there is a form-fit connection between the first form-fit element (72) the second form-fit element (74) and the third form-fit element (76), and the securing unit (58) comprises an operating grip (60) for operating the securing unit (58) and the at least one form-fit element (76) of the securing unit (58) is rigidly connected to the operating grip (60), **characterised in that** the operating grip (60) is pivotably supported, the longitudinal fastening means (38) being coupled to the operating grip (60) of the securing unit (58) and being displaceable between a release position and a lock position by means of the operating grip (60).

2. Seat fastening device according to claim 1, **characterised in that** the operating grip (60) is moveable between at least one release setting and at least one securing setting.

3. Seat fastening device according to claim 1 or 2, **characterised in that** the operating grip (60) is provided with at least one spring-elastic element for a size modification via an impact of a force (F) in at least one direction.

4. Seat fastening device according to claim 2 or 3, **characterised in that** the operating grip (60) arrives at abutting an abutment surface (54) via a movement from the at least one securing setting to the at least one release setting, as a result of which a force (F) can be generated which acts substantially transversely to a direction of the movement.

5. Seat fastening device at least according to claim 3 or 4, **characterised in that** the operating grip (60) consists substantially of a spring-elastic material.

6. Seat fastening device according to one of the preceding claims, **characterised in that** at least one of the three form-fit elements (72, 74, 76) is embodied as a recess.

7. Seat fastening system, comprising at least one seat fastening device according to one of the preceding claims and at least one fastening rail (82) which delimits on its upper side (84), by profile flanks that face each other, a longitudinal channel (88) comprising pass-through openings (92) which widen its free entry cross-section by a given amount, the pass-through openings (92) having constant distances from each other.

## Revendications

1. Dispositif de fixation de siège pour fixer un siège ou pour arrimage des charges à au moins un rail de fixation (82) fixé à un plancher (80), avec un corps de base (10), une unité de fixation longitudinale (36) comprenant au moins un moyen de fixation longitudinale (38) et avec une unité de sécurisation (58) pour sécuriser le moyen de fixation longitudinale (38), le moyen de fixation longitudinale (38) comprenant au moins un premier élément de raccordement par forme (72) et le corps de base (10) comprenant au moins un deuxième élément de raccordement par forme (74) différant du premier et l'unité de sécurisation (58) comprenant un troisième élément de raccordement par forme (76) différant du premier élément de raccordement par forme (72) et du deuxième élément de raccordement par forme (74) et une raccordement par forme étant établi, dans une position sécurisée de l'unité de sécurisation (58), entre le premier élément de raccordement par forme (72), le deuxième élément de raccordement par forme (74) et le troisième élément de raccordement par forme (76), et l'unité de sécurisation (58) comprenant une manette opérative (60) pour opérer l'unité de sécurisation (58), et l'au moins un élément de raccordement par forme (76) de l'unité de sécurisation (58) étant raccordé rigidement avec la manette opérative (60), **caractérisé en ce que** la manette opérative (60) est supportée pivotablement, le moyen de fixation longitudinale (38) étant accouplé à la manette opérative (60) de l'unité de sécurisation (58) et pouvant être déplacé entre une position de déclenchement et une position de verrouillage par le biais de la manette opérative (60).

2. Dispositif de fixation de siège selon la revendication 1, **caractérisé en ce que** la manette opérative (60) est mouvable entre au moins une position de déclenchement et au moins une position de sécurisation.

3. Dispositif de fixation de siège selon la revendication 1 ou 2, **caractérisé en ce que** la manette opérative (60) est équipée d'au moins un élément d'élasticité ressort pour modifier une magnitude par l'impact d'une force (F) dans au moins une direction.

4. Dispositif de fixation de siège selon la revendication 2 ou 3, **caractérisé en ce que** la manette opérative (60) est mise en butée avec une surface de butée (54) par un mouvement de l'au moins une position de sécurisation à l'au moins une position de déclenchement, du fait de quoi une force (F) agissant substantiellement en travers d'une direction du mouvement peut être générée.

5. Dispositif de fixation de siège au moins selon les revendications 3 à 4, **caractérisé en ce que** la manette opérative (60) est implémentée substantiellement d'un matériau d'élasticité de ressort.

6. Dispositif de fixation de siège selon l'une quelconque des revendications précédentes, **caractérisé en ce qu'au** moins un des trois éléments de raccordement par forme (72, 74, 76) est implémentée comme une échancrure.

7. Système de fixation de siège, comprenant au moins un dispositif de fixation de siège selon l'une des revendications précédentes et comprenant au moins un rail de fixation (82) délimitant, à une surface supérieure (84) ayant des flancs profilés (86) tournés l'un vers l'autre, un canal longitudinal (88), lequel comporte des apertures de passage (92) élargissant sa section transversale d'entrée libre d'une mesure prédéterminée, les apertures de passage (92) ayant une distance constante l'une de l'autre.
